# EUROPEAN PATENT SPECIFICATION

(11) **EP 4 307 088 B1**
(45) Date of publication and mention of the grant of the patent: **25.02.2026**
(21) Application number: 22184712.2
(22) Date of filing: 13.07.2022
(51) Int. Cl.: G06F 3/01, G02B 27/01

(54) **MEDIATED REALITY HEADSETS**
KOPFHÖRER MIT VERMITTELTER REALITÄT
CASQUES DE RÉALITÉ INDUITE

(43) Date of publication of application: 17.01.2024
(73) Proprietor: Nokia Technologies Oy, 02610 Espoo (FI)
(72) Inventor: Salmimaa, Marja, 33100 Tampere (FI); Järvenpää, Toni, 33100 Tampere (FI); Lehtiniemi, Arto, 33100 Tampere (FI)
(74) Representative: Swindell & Pearson Limited

(56) References cited:
- US-B1- 11 067 809
- KOHNO TADAYOSHI ET AL: "Display Leakage and Transparent Wearable Displays: Investigation of Risk, Root Causes, and Defenses", 1 February 2015 (2015-02-01), https://www.semanticscholar.org/paper/Display-Leakage-and-Transparent-Wearable-Displays%3A-Kohno-Kollin/8699f41446304c3b7466cb77ad085c62da7bd11e, XP093008975, Retrieved from the Internet <URL:https://www.microsoft.com/en-us/research/wp-content/uploads/2016/02/paper-13.pdf> [retrieved on 20221216]
- JAYBIE A DE GUZMAN ET AL: "Security and Privacy Approaches in Mixed Reality: A Literature Survey", ARXIV.ORG, CORNELL UNIVERSITY LIBRARY, 201 OLIN LIBRARY CORNELL UNIVERSITY ITHACA, NY 14853, 10 June 2020 (2020-06-10), XP081677851, DOI: 10.1145/3359626

## Description

### TECHNOLOGICAL FIELD

Examples of the disclosure relate to mediated reality headsets. Some relate to reducing leakage of images in mediated reality headsets.

### BACKGROUND

Mediated reality headsets can be used to display images to a user wearing the headset. The images could be virtual reality images, augmented reality images or any other suitable types of images. Some of the images, or light from the images, might leak from the headset. This might create an external visible bright spot and/or could enable third parties to see some of the content that the user of the headset is viewing.

US11067809B1 relates to systems and methods for minimizing external light leakage from artificial-reality displays. This apparatus operates with a light-blocking shutter which can act to block light being emitted from the display element of the system or to block ambient light from the real-world environment being transmitted to the user's eyes. The light blocking shutter can be timed to only be on for a small fraction of a repeating cycle, in sync with the display, so that the user doesn't perceive the effects of light from the outside environment being blocked.

Tadyoshi et al. "Display leakage and transparent wearable displays: Investigation of risk, root causes, and defenses" is an article that proposes defences against display leakage from transparent near-eye displays for augmented reality applications for the purposes of privacy and security. One of the defensive strategies proposed is to utilise the properties of polarization of light in order to block light leaking from the display.

Guzman et al. "Security and privacy approaches in mixed reality: A literature survey" is a literature review which highlights the topic of privacy from mixed reality systems. This includes methods such as "extrinsic input sanitization", which is a method of interfering unauthorised visual capture of the display, by projecting a beam of light to "blind" the unauthorised devices. Furthermore, it highlights optical strategies for obscuring the display of the mixed reality system, such as the use of polarization, active camouflage, or visual cryptography.

### BRIEF SUMMARY

According to various, but not necessarily all, examples of the disclosure there is provided a data-processing apparatus, configured to be communicatively coupled to a mediated reality headset, comprising means for:
determining that an object is positioned relative to the mediated reality headset, wherein the mediated reality headset comprises one or more light guides which cause one or more cones of light to be leaked, such that one or more portions of an image displayed by the mediated reality headset could be leaked in a field of view of the object, wherein the object is an electronic device with a camera or a person;
identifying one or more portions of the image that are displayed by the mediated reality headset such that leakage of those one or more portions is expected to be in the field of view of the object; and
causing modification of the display of the image by the mediated reality headset wherein the modification reduces light leakage for the one or more portions of the image that are identified as being displayed such that leakage of the one or more portions is expected to be in the field of view of the object; and
causing modification of the display of the image by the mediated reality headset wherein the modification reduces light leakage for the one or more portions of the image that are identified as being displayed such that leakage of those one or more portions is expected to be in the field of view of the object.

The modification of the display of the image may comprise at least one of:
moving a portion of the image;
changing a brightness of a portion of the image;
temporarily stopping display of a portion of the image;
changing a colour space.

The modification of the display of the image by the mediated reality headset may comprise making a first modification to the one or more portions of the image that are positioned such that leakage of those one or more portions is expected be in the field of view of the object and making a second modification to one or more portions of the image that are positioned such that leakage of those one or more portions is not expected to be in the field of view of the object wherein the first modification reduces light leakage and the second modification does not reduce light leakage.

The second modification may retain information from the image.

The first modification may comprise stopping the display of the one or more portions of the image that are positioned such that leakage of those one or more portions is expected to be in the field of view of the object and the second modification comprises increasing the brightness of one or more portions of the image that are positioned such that leakage of those one or more portions is not expected to be in the field of view of the object.

The first modification may comprise removing content from the one or more portions of the image that are positioned such that leakage of those one or more portions is expected to be in the field of view of the object and the second modification comprises adding content to one or more portions of the image that are positioned such that leakage of those one or more portions is not expected to be in the field of view of the object.

The modification may comprise a partial rendering of, at least part of, the image displayed on the mediated reality headset.

The electronic device may be configured to determine that it is positioned relative to the mediated reality headset such that the one or more portions of the image are in the field of view of the electronic device and the means of the apparatus are for obtaining information from the electronic device indicating the one or more portions of the image that are in the field of view of the electronic device.

The means may be for using the relative positions of the object and the mediated reality headset to determine the one or more portions of the image that are in the field of view of the object.

According to various, but not necessarily all, examples of the disclosure there may be provided an electronic device comprising an apparatus as described herein wherein the electronic device comprises at least one of:
a mediated reality headset,
a communications device.

According to various, but not necessarily all, examples of the disclosure there may be provided a method carried out by a data-processing apparatus configured to be communicatively coupled to a mediated reality headset, the method comprising the following steps:
determining that an object is positioned relative to the mediated reality headset, wherein the mediated reality headset comprises one or more light guides which cause one or more cones of light to be leaked, such that one or more portions of an image displayed by the mediated reality headset could be leaked in a field of view of the object, wherein the object is an electronic device with a camera or a person;
identifying one or more portions of the image that are displayed by the mediated reality headset such that leakage of those one or more portions is expected to be in the field of view of the object; and
causing modification of the display of the image by the mediated reality headset wherein the modification reduces light leakage for the one or more portions of the image that are identified as being displayed such that leakage of those one or more portions is expected to be in the field of view of the object.

According to various, but not necessarily all, examples of the disclosure there may be provided a computer program comprising computer program instructions that, when executed by processing circuitry, configured to be communicatively coupled to a mediated reality headset, cause the processing circuitry to carry out the following steps:
determining that an object is positioned relative to a mediated reality headset, wherein the mediated reality headset comprises one or more light guides which cause one or more cones of light to be leaked, such that one or more portions of an image displayed by the mediated reality headset could be leaked in a field of view of the object, wherein the object is an electronic device with a camera or a person;
identifying one or more portions of the image that are displayed by the mediated reality headset such that leakage of those one or more portions is expected to be in the field of view of the object; and
causing modification of the display of the image by the mediated reality headset wherein the modification reduces light leakage for the one or more portions of the image that are identified as being displayed such that leakage of those one or more portions is expected to be in the field of view of the object.

The invention is set out in the independent claims, preferred embodiments are set out in the dependent claims.

### BRIEF DESCRIPTION

Some examples will now be described with reference to the accompanying drawings in which:
FIG. 1 shows an example mediated reality headset;
FIG. 2 shows an example method;
FIGS. 3A to 3B show an example mediated reality headset in use;
FIGS. 4A to 4C show an example mediated reality headset in use;
FIGS. 5A to 5C show an example mediated reality headset in use;
FIGS. 6A to 6C show an example mediated reality headset in use;
FIGS. 7A to 7C show an example mediated reality headset in use;
FIGS. 8A to 8C show an example mediated reality headset in use; and
FIG. 9 shows an example apparatus.

### DETAILED DESCRIPTION

Examples of the disclosure are configured to reduce the effects of leaked images from mediated reality headsets. In examples of the disclosure the parts of the image that are leaked can be identified and then modified to reduce the effect of the leaking. This can provide for improved privacy because it prevents third parties being able to see the content in the leaked images. It can also be used to improve eye contact between third parties and the user wearing the mediated reality headset and can also improve images of the user wearing the mediated reality headset.

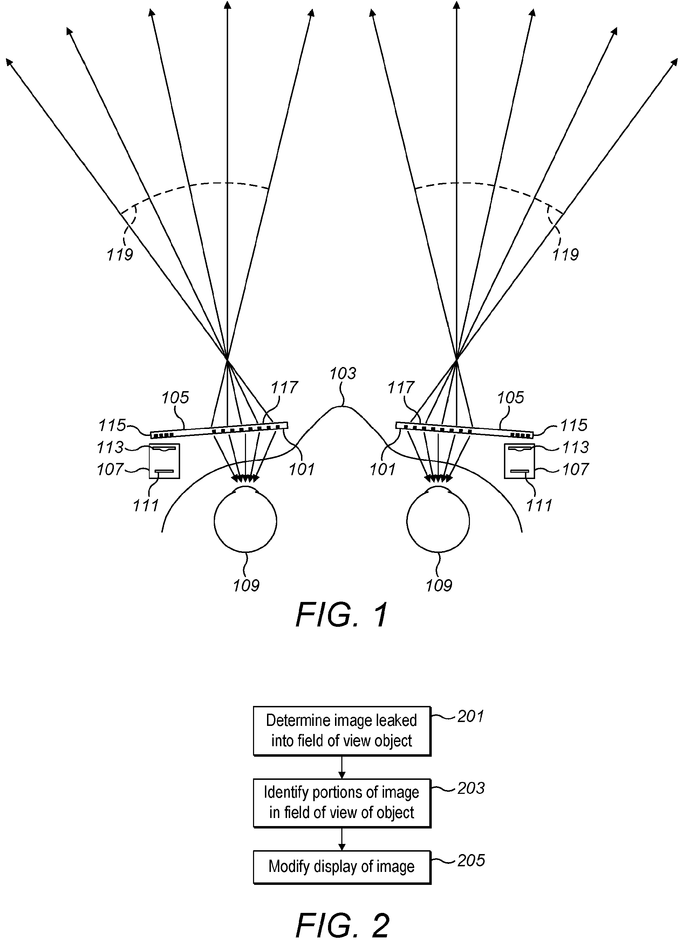

Fig. 1 schematically shows an example mediated reality headset 101. The mediated reality headset 101 can be configured to display mediated reality images to a user 103 wearing the mediated reality headset 101. The mediated reality images can be virtual reality images, augmented reality images, and/or any other suitable type of images or combination of images.

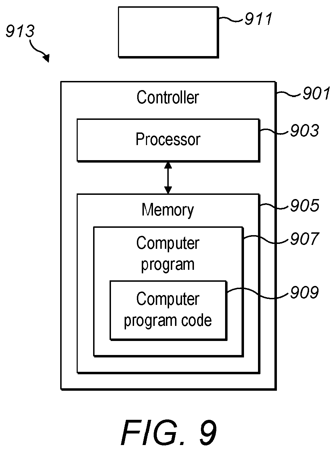

The mediated reality headset 101 shown in Fig. 1 comprises an image source 107 and one or more light guides 105. The mediated reality headset 101 can comprise other components that are not shown in Fig. 1 for example the mediated reality headset 101 could comprise an apparatus such as the apparatus shown in Fig. 9 or any other suitable means for controlling the mediated reality headset 101.

The mediated reality headset 101 can be configured to be worn by the user 103. The mediated reality headset 101 can comprise a mounting portion such as a head piece. The mounting portion can enable the mediated reality headset 101 to be mounted on the head or face of the user 103. When the mediated reality headset 101 is mounted on the head or face of the user 103, the user's head or face supports the weight or at least a portion of the weight of the mediated reality headset 101. In some examples the mediated reality headset 101 can comprise ear pieces which enable the mediated reality headset 101 to be worn as a pair of glasses.

The image source 107 comprises any means which can be configured to generate an image. In the example of Fig. 1 the image source 107 comprises a display 111 and one or more optical components 113.

The display 111 can comprise any means for providing an image. The display 111 can comprise a transmissive liquid crystal display (LCD) which can be illuminated by a backlight such as a light emitting diode (LED), a reflective liquid crystal on silicon (LCoS) display which can be illuminated using any suitable means, an emissive organic light emitting diode (OLED) display, a scanning LED display or any other suitable means. The display 111 can be configured to display images and/or any other suitable content. The display 111 can be configured to display content relating to virtual reality or augmented reality applications.

The optical components 113 can comprise any means which can be configured to focus a beam of light originating from or through the display 111. The optical components 113 can be configured to focus or collimate the beam of light before the beam of light is provided to the light guide 105. In some examples of the disclosure the optical components 113 comprise one or more lenses.

The light guides 105 comprise an incoupling diffractive element 115 and an outcoupling diffractive element 117. The incoupling diffractive element 115 is positioned adjacent to the optical components 113 of the image source 107 so that the beam of light from the image source is incoupled into the light guide 105. The outcoupling diffractive element 117 is positioned so that, when a user 103 is wearing the mediated reality headset 101 beams of light that are outcoupled by the outcoupling diffractive element 117 are provided to the user's eyes 109. This can enable the user 103 to view the images provided by the image source 107.

In the example of Fig. 1 the mediated reality headset 101 comprises two image sources 107 and two light guides 105. The mediated reality headset 101 is configured so that when a user 103 is wearing the mediated reality headset 101 a first light guide 105 is positioned close to the user's left eye 109 and a second light guide 105 is positioned close to the user's right eye 109. The different light guides 105 are optically coupled to different image sources 107. This can enable the images that are provided by the first light guide 105 to be controlled independently of images that are provided by the second light guide 105. In other examples the mediated reality headset 101 could comprise a single image source 107 that is configured to control the images that are provided by either of the light guides 105.

The image sources 107 can be configured to control the images so that the same images are provided to both eyes 109 of the user 103. In some examples the image sources 107 can be configured to control the images so that different images are provided to the different eyes 109 of the user 103. This would enable a user wearing the mediated reality headset 101 to see different images with the different eyes 109.

Not all of the light that is incoupled to the light guide 105 is outcoupled by the outcoupling diffractive element 117 towards the user's eyes 109. Some of the light leaks out of the light guide 105. Some of the light will leak out of the light guide 105 on the opposite side of the light guide 105 to the outcoupling diffractive element 117. This causes a cone of light 119 to be leaked by the mediated reality headset. This cone of light 119 could be visible as a bright spot in the lenses of the mediated reality headset. This can create a glow that would look strange for people looking at the user. This can also obstruct the view to the user's eyes 109 for people looking at the user, resulting in compromised eye contact. Also, some of the content that is being displayed to the user 103 could be visible in the leaked light. This could create privacy issues for the user 103. This could also reduce the visibility of the eye(s) of the user 103 towards objects in the outside world.

Examples of the disclosure enable the effects of the leakage of the light to be reduced.

Fig. 2 shows an example method for reducing the effect of the leaked light. The method could be used for mediated reality headsets 101 as shown in Fig. 1 or for any other suitable type of devices.

The method comprises, at block 201, determining that an object is positioned relative to a mediated reality headset 101 such that one or more portions of an image displayed by the mediated reality headset 101 could be leaked in a field of view of the object.

In some examples the object could be an electronic device such as a mobile phone or camera. The electronic device could be capable of capturing images of the mediated reality headset 101 and/or the user wearing the mediated reality headset 101.

In some examples the object could be a person. The person could be looking at the mediated reality headset 101 and/or looking at the user wearing the mediated reality headset 101.

The field of view of the object is the angular range that is observable by the object. If the object is an electronic device with a camera then the field of view is the area that can be captured in images by the camera. In such cases the angular range of the field of view can be determined by the sensors and/or optical components that are used within the camera and/or any other suitable factors. If the object is a person then the field of view is the angular range of light that can be detected by the person's eyes.

Whether or not an image leaked by the mediated reality headset 101 is within the field of view of the object will be dependent upon the size of the field of view of the object and the position of the object relative to the mediated reality headset 101.

At block 203 the method comprises identifying one or more portions of the image that are displayed by the mediated reality headset 101 such that leakage of those one or more portions is expected to be in the field of view of the object. The identified portions are the portions of the image that are displayed in positions so that the leaked beams of light corresponding to that portion overlap with the field of view of the object.

A leaked portion of an image can be expected to be in the field of view of an object if it is determined that it is likely that the leaked portion overlaps with the field of view of the object. It can be determined that it is likely that the leaked portion overlaps with the field of view of the object if the probability that the leaked portion overlaps with the field of view of the object is above a predetermined value. In some cases, the probability of whether or not the leaked portion overlaps with the field of view of the object can be determined based on information relating to the positions of the mediated reality headset and the object and the field of view of the object. In some cases, the actual field of view of the object might not be known and so this information could be estimated.

Any suitable process can be used to identify the one or more portions of the image that are displayed by the mediated reality headset 101 such that leakage of those one or more portions is expected to be in the field of view of the object. In some examples information relating to the relative positions of the object and the mediated reality headset 101 can be used to determine the one or more portions of the image that are in the field of view of the object. Any suitable means could be used to determine the relative positions of the object and the mediated reality headset 101. For example, the mediated reality headset 101 could comprise one or more sensors or an imaging device that could enable nearby objects to be identified and/or located. This can be used if the object is a person or other type of object. In some examples the object could be an electronic device that could be configured to send information to the mediated reality headset 101 indicative of its position and/or field of view. In some examples information from the object could be used to determine the portion of the image that might be leaked into the field of view of the object. For instance, if the object is an electronic device it could be configured to capture an image and determine whether or not the mediated reality headset 101 and/or portions of the images displayed by the mediated reality headset 101 are visible in the captured image. This information could then be provided to the mediated reality headset 101.

At block 205 the method comprises causing modification of the display of the image by the mediated reality headset 101. The modification of the image can be implemented by modifying the image that is displayed on the display 111 of the image source 107 or by any other suitable means.

The modification of the image reduces light leakage for the one or more portions of the image that are identified as being displayed such that leakage of those one or more portions is expected to be in the field of view of the object. In some examples the modification of the images can be applied to just the portion that has been identified as expected to leak into an object's field of view. In some examples the modification of the images can be applied to other portions of the image as well.

The modification that is applied can comprise any suitable change in the way the image is displayed. In some examples the modification could comprise any one or more of moving a portion of the image, changing a brightness of a portion of the image, temporarily stopping display of a portion of the image, changing a colour space and/or any other suitable modification.

In some examples different modifications can be applied to different parts of the images. For instance, the modification of the display of the image could comprise making a first modification to the one or more portions of the image that are positioned such that leakage of those one or more portions is expected to be in the field of view of the object and making a second modification to one or more portions of the image that are positioned such that leakage of those one or more portions is not expected to be in the field of view of the object. The first modification can be used to reduce light leakage and the second modification does not need to reduce light leakage. For instance, the first modification could remove information or content from the image so that this information or content cannot be leaked. The second modification could retain this information or content. For example, it could be displayed brightly or more prominently in the second portion.

In examples of the disclosure the respective modifications can be applied to the displayed images temporarily. For example, the modifications can be applied while the object is positioned in a location in which the leaked light would be visible, or while an image is being captured and/or for any other period of time. After the time period has ended the modification can stop and the image can return to the format in which it was originally displayed.

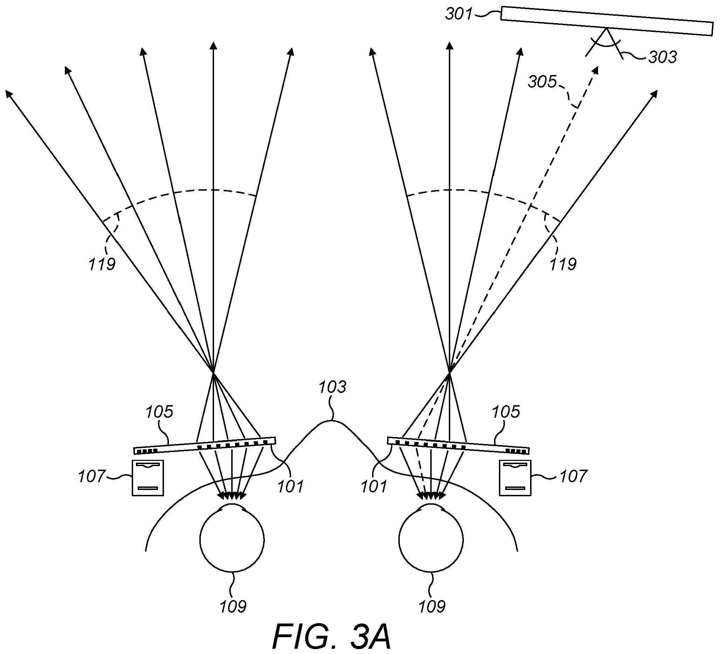

Figs. 3A to 3B show an example mediated reality headset 101 in use. The mediated reality headset 101 can be as shown in Fig. 1. Corresponding reference numerals are used for corresponding features.

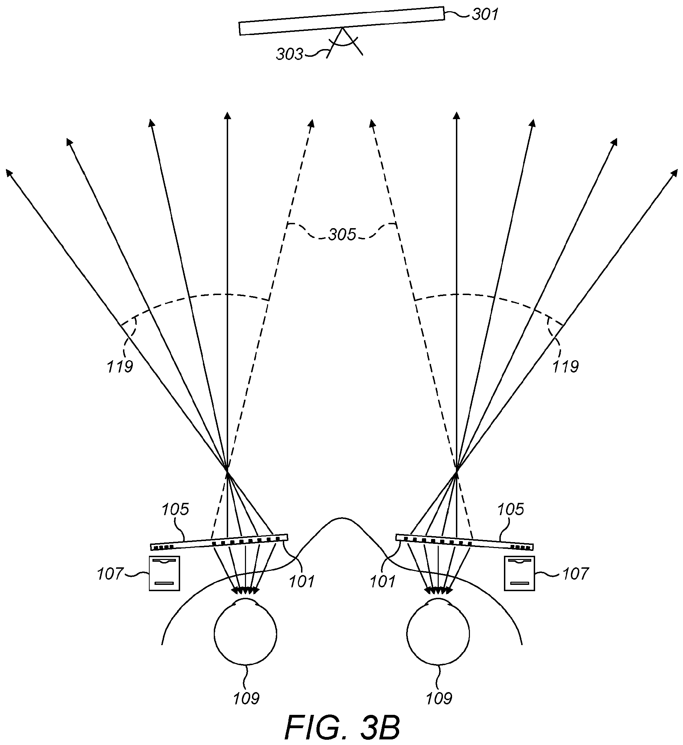

In the examples of Figs. 3A and 3B cones of light 119 are leaked outwards from the mediated reality headset 101. The cones of light 119 can comprise a plurality of different beams of light. The different beams of light correspond to different portions of the image displayed by the mediated reality headset 101.

An object 301 is positioned close to the mediated reality headset 101. The object 301 has a field of view 303.

In this example of Figs. 3A and 3B the object 301 is an electronic device. The electronic device could be a mobile phone or any other suitable type of device. The electronic device could be a mobile device, for example it could be a device such as a mobile phone or tablet that a user could carry about them. In other examples the electronic device could be non-portable, for example it could be a camera that is in a fixed position, or any other suitable type of device. In some examples the camera could be part of the mediated reality headset 101. For example, a user 103 could be wearing the mediated reality headset 101 and capturing an image of themselves in a mirror or other reflective surface. In such cases the object 301 would be the mirror or reflective surface.

The electronic device can comprise a camera. The field of view 303 of the object 301 is the angular range that can be captured by the camera. The field of view can be determined by the sensor in the camera, the optical components in the camera and/or any other suitable factor. In some examples the field of view of the object 301 is fixed.

In other examples it could be adjusted. For example, one or more optical components of the camera or other parameters of the camara could be adjusted.

In the example of Fig. 3A the object 301 is positioned to the right of the user 103. Part of the cone of light 119 from the right-hand side of the mediated reality headset 101 is in the field of view 303 of the object 301. In the example of Fig. 3A the beam of light that is in the field of view 303 of the object 301 is indicated by a dashed line 305.

In examples of the disclosure the portion of the image that is displayed so that the leakage of that portion falls within the field of view of the object 301 can be determined. Any suitable means can be used to determine the portions of the image that fall within the field of view 303 of the object 301. For instance, in some examples the object 301 could capture images of the mediated reality headset 101 and these images could be analysed to identify leaked portions of the images displayed by the mediated reality headset 101. In some examples the leaked portions of the image could be determined based on the relative positions of the mediated reality headset 101 and the object 301, and information about the field of view 303 of the object 301.

In other examples the object 301 could be something other than an electronic device. For example, the object 301 could be a person who could be looking at the user 103 wearing the mediated reality headset 101. In such case the field of view 303 of the object is the angular range that can be detected by the persons eyes. In such cases the leaked portions of the image could be determined based on the relative positions of the mediated reality headset 101 and the object 301 and information about the field of view 303 of the object 301. The information about the field of view of the person could be estimated based on expected fields of view for people or could be adjusted for known people.

Once the portion of the image that is leaked into the field of view 303 is identified it can be modified to reduce the leakage. In the example of Fig. 3A the image displayed by the right-hand image source 107 would be modified. In some examples only the part of the image corresponding to the dashed line 305 might be modified. That is the portion of the image is leaked into the field of view 303 and can be modified while the rest of the image could be left unmodified.

In the example of Fig. 3A the light that is leaked from the left-hand side of the mediated reality headset 101 is not in the field of view 303 of the object 301. Therefore, the portion of the image displayed by the left-hand side image source 107 does not need to be modified to reduce light leakage. Therefore, in some examples the portion of the image displayed by the left-hand side image source 107 is not modified. In some examples the portion of the image displayed by the left-hand side image source 107 could be modified to compensate for the reduction or removal of content from the image displayed by the right-hand side image source 107. For instance, the portion of the image could be displayed brightly or in another manner that increases the prominence. In some examples content could be added to the portion of the image displayed by the left-hand side image source 107. The content could be content that has been removed from an image displayed by the right-hand side image source 107.

In some examples the images provided by the respective image sources 107 can be modified so as to reduce binocular differences between the images. For instance, if a portion of an image displayed by the left-hand side image source 107 is modified to reduce light leakage, then the image displayed by the right-hand side image source 107 could be modified in a corresponding manner even though the portion of the image displayed by the right-hand side image source 107 would not be leaked into the field of view of the object 301.

Fig. 3B shows another example of the mediated reality headset 101 in use. In the example of Fig. 3B the object 301 is positioned in front of the user 103. Part of both of the cones of light 119 from the mediated reality headset 101 are in the field of view 303 of the object 301. In the example of Fig. 3B the beams of light that are in the field of view 303 of the object 301 are indicated by the dashed lines 305.

The portions of the image that are leaked into the field of view 303 can be identified using any suitable means. Once the relevant portions of the image have been identified the portions of the images displayed by the image sources 107 can be modified. In the example of Fig. 3B both the portions of image displayed by the right-hand image source 107 and the portion of the image displayed by the left-hand image source 107 would be modified so as to reduce the light being leaked into the field of view 303 of the object 301.

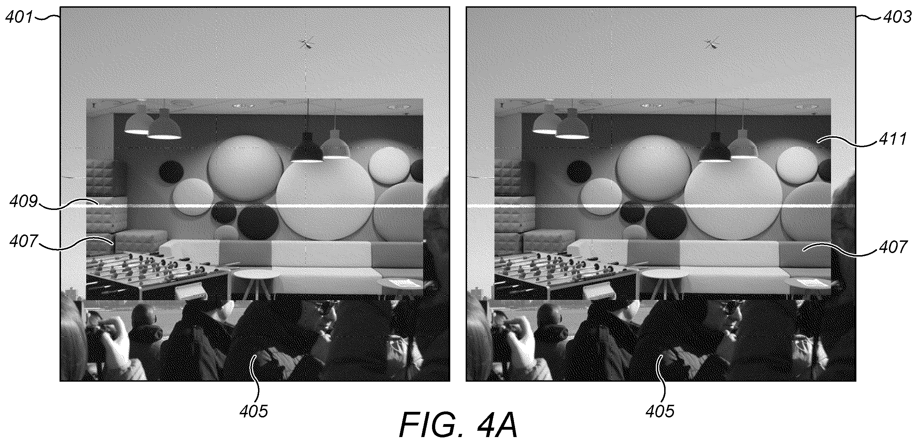

Examples of modifications that could be made to the portions of the images are shown in Figs. 4A to 8C. Other modifications or combinations of modifications could be made in other examples.

Figs. 4A to 4C show example images that could be displayed by a mediated reality headset 101. Fig. 4A shows an example the scene that a user 103 wearing a mediated reality headset 101 might see when they are using the mediated reality headset 101. In this example the mediated reality headset 101 is an augmented reality headset. The mediated reality content can be augmented reality content that is displayed so that it overlays real world content. This enables the user 103 to view both real world content and mediated reality content while using the mediated reality headset 101. Other types of content could be used in other examples.

Fig. 4A shows a first scene 401 that a user 103 would see with their left eye and a second scene 403 that a user 103 would see with their right eye. In this example both of the scenes 401, 403 comprise real-world content 405 and mediated reality content 407.

The real-world content 405 comprises the real environment that is around the user 103. The user 103 can view this content through a transparent, or partially transparent, portion of the mediated reality headset 101. In this example the real-world content 405 comprises a crowd of people. The real-world content 405 in Fig. 4A is shown identically for the left eye and the right eye although it is to be appreciated that there would be some slight differences due to the spacing between the user's right eye and left eye.

The mediated reality content 407 comprises one or more images that are displayed by the mediated reality headset 101. In this example the mediated reality content 407 comprises an image having a first portion 409 and a second portion 411. The first portion 409 is displayed to the left eye. For instance, this could be displayed by a left-hand display 111 in the mediated reality headset 101. The second portion 411 is displayed to the right eye. For instance, this could be displayed by a right-hand display 111 in the mediated reality headset 101.

In the example of Fig. 4A the mediated reality headset 101 is configured so that the same content is displayed for both the left eye and the right eye. That is, the first portion 409 of the image is the same as the second portion 411 of the image. In other examples different content could be displayed for the respective eyes so that the first portion 409 of the image might not be the same as the second portion 411 of the image. For example, there could be horizontal disparity between the portions 409 and 411 for inducing stereoscopic depth effect.

In Fig. 4A the respective portions 409, 411 of the image have not been modified to account for leakage yet. In this example the image comprises an image of a room.

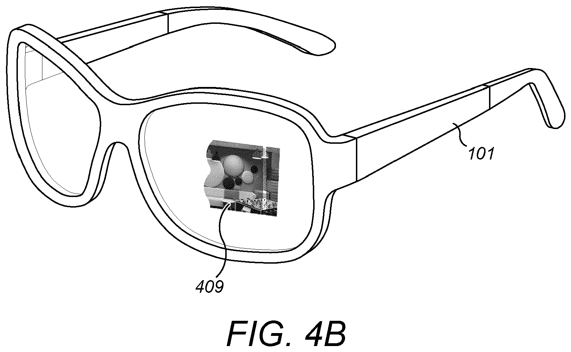

Fig. 4B shows how the mediated reality headset 101 might appear to an object 301 positioned in front of the mediated reality headset 101. For example, a person might be looking at the user 103 of the mediated reality headset 101 or a device could be capturing images of the mediated reality headset 101, which the user 103 may be wearing. The object 301 is not shown in Fig. 4B.

In this example the object 301 is positioned so that light leaking from the left- hand side of the mediated reality headset 101 is in the field of view of the object 301. This makes the portion 409 of the image displayed on the left-hand side of the mediated reality headset 101 visible to the object 301.

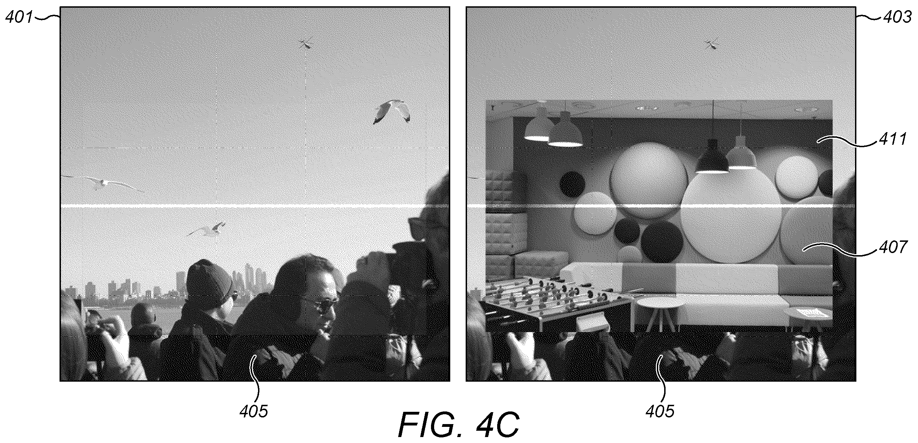

Fig. 4C shows an example modification that can be made to the images displayed by the mediated reality headset 101 so as to reduce the visibility of the leaked portion of the image to the object 301.

In the example of Fig. 4C a first modification is applied to the first portion 409 of the image and a second modification is applied to the second portion 411 of the image. Fig. 4C shows a first scene 401 that a user 103 would see with their left eye and a second scene 403 that a user 103 would see with their right eye after the modification has been applied.

In this example the portion 409 of the image that is displayed to the user's left eye comprises the portion 409 that is visible to the object 301 and so this is the portion that is modified to reduce the light that will be leaked. The second portion 411 might have no modification applied to it or could have a modification applied that compensates for the modification applied to the first portion 409 of the image.

In the example of Fig. 4C the first modification ccomprises stopping the display of the portion 409 of the image that is positioned such that leakage of that portion 409 would be in the field of view of the object 301. In this example the portion 409 of the image that is displayed to the user's left eye is no longer displayed. As shown in Fig. 4C the user's left eye would see the real-world scene 405 with no overlaying mediated reality content.

In the example of Fig. 4C the second modification does not comprise stopping the display of the portion or portions 411 of the image that are not positioned such that leakage of those one or more portions would be in the field of view of the object 301. In this example the portion 411 of the image that is displayed to the user's right eye are still displayed. As shown in Fig. 4C the user's right eye would see the real-world scene 405 with overlaying mediated reality content.

In some examples the portion 411 of the image that is still displayed could be modified to compensate for the fact that a portion 409 of the image has been removed. For instance, the second modification could comprise increasing the brightness of one or more portions 411 of the image that are positioned such that leakage of those one or more portions would not be in the field of view of the object. For example, the portion 411 of the image that has not been removed could be displayed more brightly or in any other suitable manner that increases the prominence of the remaining content. This could apply for examples as shown in Fig. 4C and/or for any other examples where the first modification comprises removing some content from the displayed image.

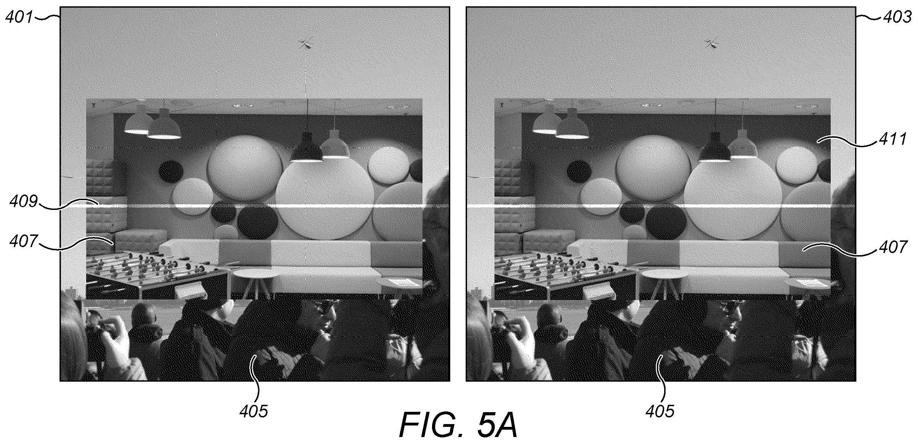

In the example of Figs. 4A to 4C all of the portion 409 of the image that is displayed to user's left eye is removed when the modification is applied even though only part of this portion of the image is visible to the object through the leaked light. Modifying more of the image than is leaked can be simpler and can ensure that all of the leaked image is modified appropriately. However, the removal (or other modification) of more content that is necessary could negatively affect the user experience. Figs. 5A to 5C show another example in which only the portion 409 of the image that is leaked is modified.

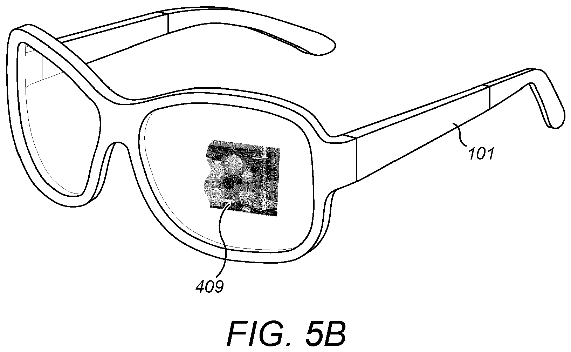

Figs. 5A to 5C show example images that could be displayed by a mediated reality headset 101. Figs. 5A and 5B show the scenes that a user 103 of the mediated reality headset 101 would see and a view of the mediated reality headset 101 as it would be seen by an object 301. Figs. 5A and 5B show the same scenario as Figs. 4A and 4B. Corresponding reference numerals are used for corresponding features.

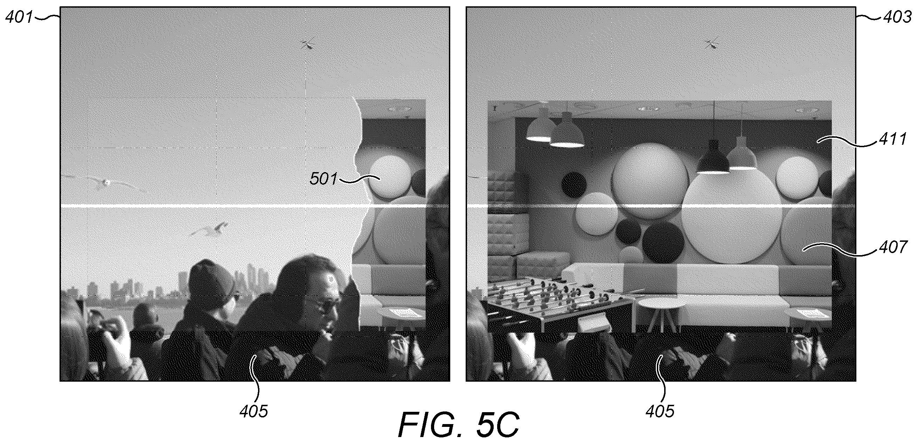

Fig. 5C shows a different example modification that can be made to the images displayed by the mediated reality headset 101 so as to reduce the visibility of the leaked image to the object 301.

In the example of Fig. 5C the portion 409 of the image that is displayed to the left eye of the user is modified so that some of it is removed but a section 501 is still displayed. The section 501 that is still displayed comprises the section that is not positioned so that light leaking from the mediated reality headset is in the field of view of the object 301. As shown in Fig. 5C the scene for the user's left eye comprises the real-world scene 405 and the section 501 of the image. This reduces the amount of mediated reality content in the scene for the left eye but does not remove it completely.

In the example of Fig. 5C the second modification does not comprise stopping the display of the portions 411 of the image that are not positioned such that leakage of those one or more portions would be in the field of view of the object 301. As shown in Fig. 5C the scene for the right eye comprises the real-world scene 405 with overlaying mediated reality content. The portion 411 of the image that is displayed to the right eye could have no changes made to it or it could be modified to account for the content being removed from the scene for the left eye. For example, section of the image that corresponds to the removed section could be displayed more brightly in the portion 411 of the image that is displayed to user's right eye.

The example of Figs. 5A to 5C therefore retains a greater proportion of the mediated reality content compared to the example of Figs. 4A to 4C. This can improve the user experience.

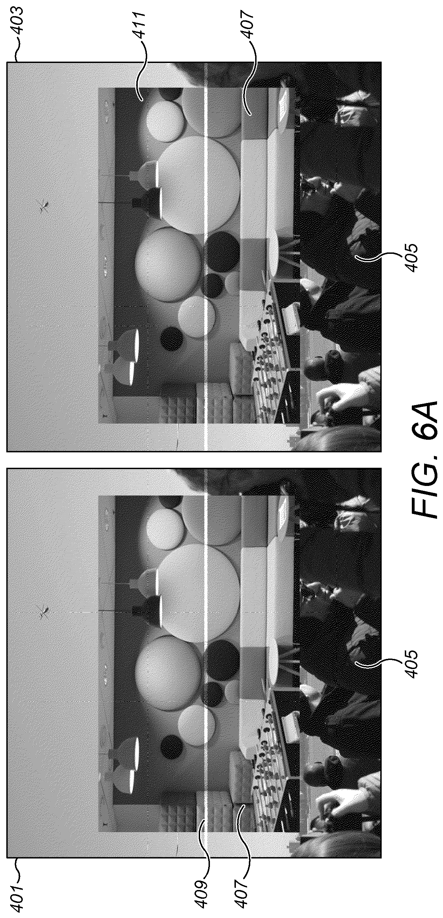

Figs. 6A to 6C show another example for modifying the images displayed by the mediated reality headset 101. In this example the modification comprises a partial rendering of, at least part of, the image displayed on the mediated reality headset.

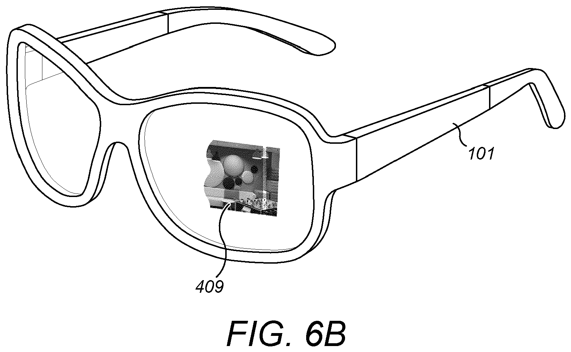

Figs. 6A and 6B shows the scenes that a user 103 of the mediated reality headset 101 would see and a view of the mediated reality headset 101 as it would be seen by an object 301. Figs. 6A and 6B show the same scenario as Figs. 4A and 4B. Corresponding reference numerals are used for corresponding features.

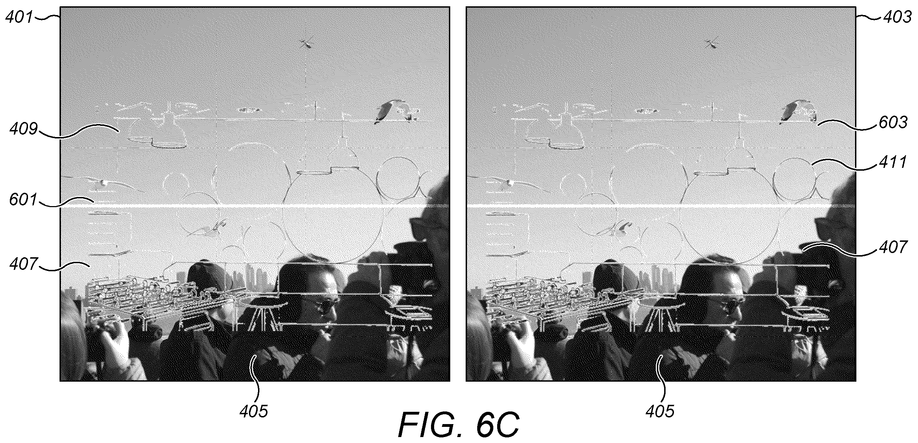

Fig. 6C shows a different example modification that can be made to the images displayed by the mediated reality headset 101 so as to reduce the visibility of the leaked image to the object 301.

In the example of Fig. 6C both the portion 409 of the image that is displayed to the left eye of the user and the portion of the image 411 that is displayed to the right eye of the user are modified. The portions 409, 411 of the images are modified by using partial rendering of the images. The partial rendering reduces the amount of light used to render the image and so reduces the light leaked from the mediated reality headset 101.

In this example the partial rendering comprises an outline image. The outline image comprises outlined edges of the items within the image but the items themselves are transparent. In the example of 6C the items are fully transparent. In other examples they could be partially transparent. A first portion 601 of the outline image is displayed to the left eye and a second portion 603 of the outline image is displayed to the right eye. As shown in Fig. 6C the user can see the real-world scene 405 through the transparent sections of the partially rendered image.

In the example of Fig. 6C the same modification is applied to both the portions 409, 411 of the image. In other examples the modification comprising partial rendering could be applied to only part of the image. For instance, the partial rendering could be applied to the portion 409 of the image displayed to the left eye or to the portion of the image that is visible to an object 301 or to any other suitable portion. In such cases the rest of the image could be displayed normally or could be modified to increase the prominence and account for the modification made to the other portions.

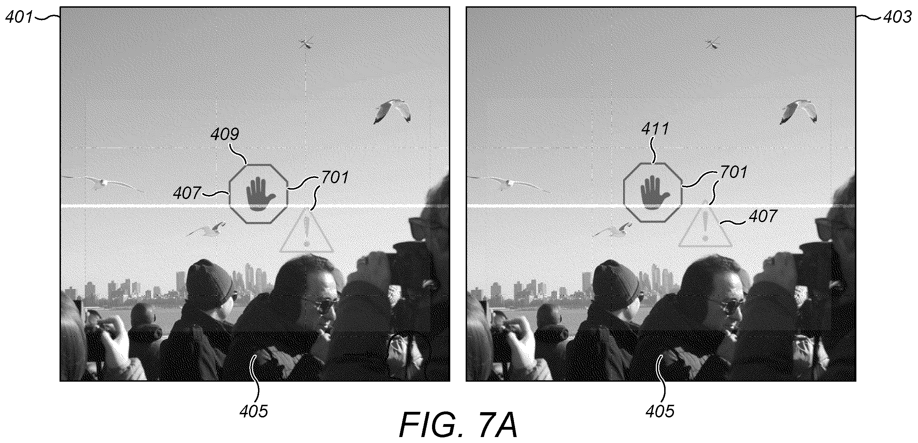

Figs. 7A to 7C show another example for modifying the images displayed by the mediated reality headset 101. In this example the modification comprises moving content from portions of the image that would be leaked into the field of view of the object 301.

Fig. 7A shows another example of first scene 401 that a user 103 would see with their left eye and second scene 403 that a user 103 would see with their right eye. Both of the scenes 401, 403 comprise real-world content 405 and mediated reality content 407.

The real-world content 405 comprises the real environment that is around the user 103. The real-world content 405 in this example is the same as that shown in Figs 4A to 6C.

The mediated reality content 407 comprises one or more images that are displayed by the mediated reality headset 101. The mediated reality content in this example is different to the content that is shown in Figs. 4A to 6C. In this example the mediated reality content 407 comprises icons 701. In this example the icons are warning indicators. The icons could provide information about the functions of the mediated reality headset 101 to the user 101. Other types of mediated reality content 407 could be used in other examples.

The icons 701 are displayed as an image. The image comprises a first portion 409 and a second portion 411.The first portion 409 is displayed to the left eye. For instance, this could be displayed by a left-hand display 111 in the mediated reality headset 101. The second portion 411 is displayed to the right eye. For instance, this could be displayed by a right-hand display 111 in the mediated reality headset 101. Other arrangements and configurations of the respective portions of the images could be used in other examples of the disclosure.

In the example of Fig. 7A the mediated reality headset 101 is configured so that the same content is displayed for both the left eye and the right eye. That is, the first portion 409 of the image is the same as the second portion 411 of the image. In other examples different content could be displayed for the respective eyes so that the first portion 409 of the image might not be the same as the second portion 411 of the image.

In Fig. 7A the respective portions 409, 411 of the image have not been modified to account for leakage yet. In this example the icons 701 are displayed in a central position. The icons 701 are displayed so that they appear in the centre, or close to the centre, of the scene 401, 403 for each eye. Displaying the icons 701 in such as position makes them very noticeable for the user 103 and so can be an appropriate way to provide a user 103 with important information.

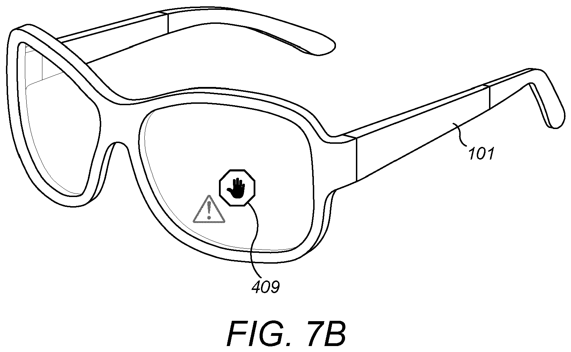

Fig. 7B shows how the mediated reality headset 101 might appear to an object 301 positioned in front of the mediated reality headset 101. For example, a person might be looking at the user 103 of the mediated reality headset 101 or a device could be capturing images of the user 103 wearing the mediated reality headset 101. The object 301 is not shown in Fig. 7B.

In this example the object 301 is positioned so that light leaking from the left- hand side of the mediated reality headset 101 is in the field of view of the object 301. This makes the portion 409 of the image displayed on the left-hand side of the mediated reality headset 101 visible to the object 301. In this example the icons 701 can be seen in the left lens of the mediated reality headset 101.

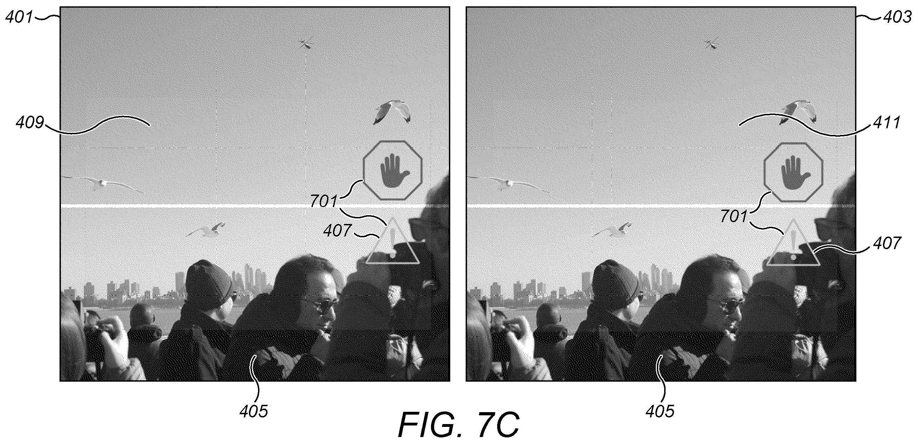

Fig. 7C shows an example modification that can be made to the images displayed by the mediated reality headset 101 so as to reduce the visibility of the leaked portion of the image to the object 301.

In the example of Fig. 7C the icons 701 are moved from the central position in the scene. The icons 701 are moved to a position in which the light that is leaked is not in the field of view 303 of an object 301. In this example the icons 701 are moved towards the right of the scenes 401, 403. When the icons 701 are in this position the icons 701 are still visible to the user 103 but would not be leaked into the field of view 303 of the object 301.

The location to which the icons 701 are moved can be selected based on portion of the image that is leaked to the field of view of the object 301. For instance, it can be determined which portions of the image are expected to be leaked to the object 303 and/or which portions are not expected to be leaked to the object 303. In this case the portion of the image that is displayed in the left and the centre would be leaked and so the icons 701 are moved to the right of the image and not to the left.

In the example of Fig. 7C both the portion 409 of the image that is displayed to the left eye of the user and the portion of the image 411 that is displayed to the right eye of the user 103 are modified. In this example the same modification is applied to both portions 409, 411 so the icons 701 are moved in the same manner for both the portion 409 displayed to the left eye and the portion 411 displayed to the right eye. This makes sure that the user 103 can see the content clearly.

In other examples different modifications could be applied to different portions 409, 411. For instance, as shown in Fig. 7B only the portion 409 of the image that is displayed to the left eye of the user 103 is leaked to the object 303. In this case the issue with the leakage can be resolve by only modifying the portion 409 of the image that is displayed to the left eye of the user 103. The portion 411 that is displayed to the right eye of the user could be unmodified or a different modification could be applied.

The example of Figs. 7A to 7C therefore shows an example where the first modification, comprises removing content from the first portion of the image that is positioned such that leakage of this first portion would be in the field of view 303 of the object 301. The second modification comprises adding content to one or more portions 411 of the image that are positioned such that leakage of those one or more portions 411 would not be in the field of view 303 of the object 301. That is, the icons 701 are removed from the centre of the scene where they would be visible to the object 301 and moved towards the edge of the scene where they would not be visible to the object 301.

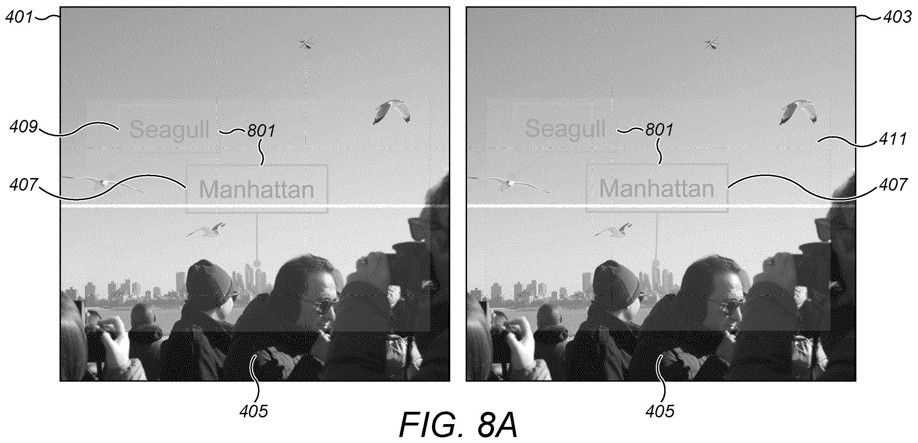

Figs. 8A to 8C show another example for modifying the images displayed by the mediated reality headset 101. In this example the modification also comprises moving content from portions of the image that would be leaked into the field of view of the object 301.

Fig. 8A shows another example of first scene 401 that a user 103 would see with their left eye and second scene 403 that a user 103 would see with their right eye. Both of the scenes 401, 403 comprise real-world content 405 and mediated reality content 407.

The real-world content 405 comprises the real environment that is around the user 103. The real-world content 405 in this example is the same as that shown in Figs 4A to 7C.

The mediated reality content 407 comprises one or more images that are displayed by the mediated reality headset 101. The mediated reality content in this example is different to the content that is shown in Figs. 4A to 7C. In this example the mediated reality content 407 comprises labels 801. The labels 801 comprise information about items in the real-world content 405 and are positioned so that they appear close to the relevant items in the scenes 401, 403. In the example of Fig. 8A a first label "seagull" is displayed so that it appears close to the seagull and a second label "Manhattan" is displayed so that it appears close to the Manhattan skyline in the scenes 401, 403. Other types of mediated reality content 407 could be used in other examples.

The labels 801 are displayed as an image. The image comprises a first portion 409 and a second portion 411.The first portion 409 is displayed to the left eye. For instance, this could be displayed by a left-hand display 111 in the mediated reality headset 101. The second portion 411 is displayed to the right eye. For instance, this could be displayed by a right-hand display 111 in the mediated reality headset 101. Other arrangements and configurations of the respective portions of the images could be used in other examples of the disclosure.

In the example of Fig. 8A the mediated reality headset 101 is configured so that the same content is displayed for both the left eye and the right eye. That is, the first portion 409 of the image is the same as the second portion 411 of the image. In other examples different content could be displayed for the respective eyes so that the first portion 409 of the image might not be the same as the second portion 411 of the image.

In Fig. 8A the respective portions 409, 411 of the images have not been modified to account for leakage yet.

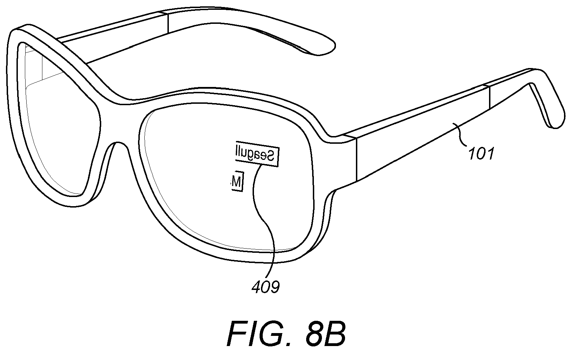

Fig. 8B shows how the mediated reality headset 101 might appear to an object 301 positioned in front of the mediated reality headset 101. For example, a person might be looking at the user 103 of the mediated reality headset 101 or a device could be capturing images of the user 103 wearing the mediated reality headset 101. The object 301 is not shown in Fig. 8B.

In this example the object 301 is positioned so that light leaking from the left- hand side of the mediated reality headset 101 is in the field of view of the object 301. This makes the portion 409 of the image displayed on the left-hand side of the mediated reality headset 101 visible to the object 301. In this example the labels 801 can be seen in the left lens of the mediated reality headset 101.

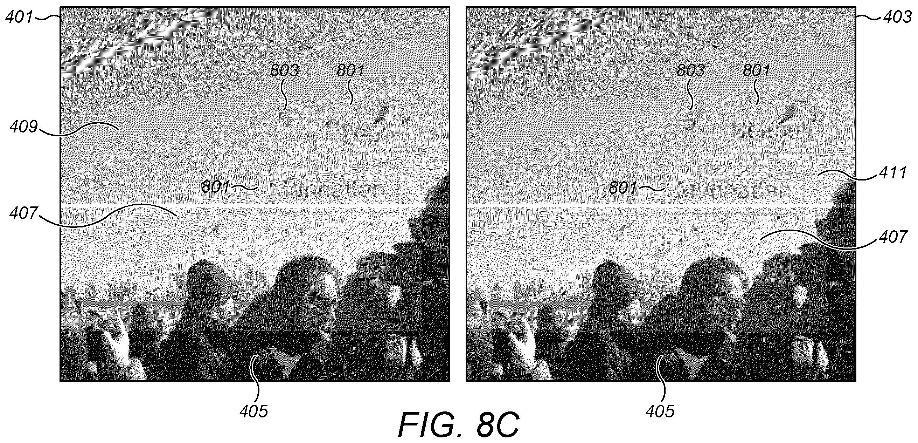

Fig. 8C shows an example modification that can be made to the images displayed by the mediated reality headset 101 so as to reduce the visibility of the leaked portion of the image to the object 301.

In the example of Fig. 8C the labels 801 are moved from their original position in the scene. The labels 801 are moved to a position in which the light that is leaked is not in the field of view 303 of an object 301. In this example the labels 801 are moved towards the right of the scenes 401, 403. When the labels 801 are in this position the labels 801 are still visible to the user 103 but would not be leaked into the field of view 303 of the object 301.

The location to which the labels 801 are moved can be selected based on portion of the image that is leaked to the field of view of the object 301. For instance, it can be determined which portions of the image are expected to be leaked to the object 303 and/or which portions are not expected to be leaked to the object 303. In this case the portion of the image that is displayed in the left and the centre would be leaked and so the labels 801 are moved to the right of the image and not to the left.

In the example of Fig. 8C additional mediated reality content is added to the image to account for the modification that has been made to the image. In this case an additional label 803 is added. The additional label comprises an indication of the distance between the label 801 that has been moved and the object that the label 801 relates to. The additional label 803 can provide an indication of how far the label 801 has been moved from its original position.

In the example of Fig. 8C both of the labels 801 are moved. In this case both of the labels 801 would be in the leaked image that is visible to the object 301. In some other examples it might be the case that one or more of the labels 801 would not be in the leaked image that is visible to the object 301. In this case only the labels 801 that would be in the image that is visible to the object 301 would be moved and the labels 801 that would not be in the image that is visible to the object 301 would not be moved.

In the example of Fig. 8C both the portion 409 of the image that is displayed to the left eye of the user and the portion of the image 411 that is displayed to the right eye of the user 103 are modified. In this example the same modification is applied to both portions 409, 411 so the labels 801 are moved in the same manner for both the portion 409 displayed to the left eye and the portion 411 displayed to the right eye. This makes sure that the user 103 can see the content clearly.

The example of Figs. 8A to 8C therefore shows another example where the first modification, comprises removing content from the first portion of the image that is positioned such that leakage of this first portion would be in the field of view 303 of the object 301 and the second modification comprises adding content to one or more portions 411 of the image that are positioned such that leakage of those one or more portions 411 would not be in the field of view 303 of the object 301. That is, the labels 801 are removed from the centre of the scene where they would be visible to the object 301 and moved towards the edge of the scene where they would not be visible.

Fig. 9 schematically illustrates an apparatus 913 that can be used to implement examples of the disclosure. In this example the apparatus 913 comprises a controller 901. The controller 901 can be a chip or a chip-set. In some examples the controller can be provided within a mediated reality headset 101 or any other suitable type of device.

In the example of Fig. 9 the implementation of the controller 901 can be as controller circuitry. In some examples the controller 901 can be implemented in hardware alone, have certain aspects in software including firmware alone or can be a combination of hardware and software (including firmware).

As illustrated in Fig. 9 the controller 901 can be implemented using instructions that enable hardware functionality, for example, by using executable instructions of a computer program 907 in a general-purpose or special-purpose processor 903 that can be stored on a computer readable storage medium (disk, memory etc.) to be executed by such a processor 903.

The processor 903 is configured to read from and write to the memory 905. The processor 903 can also comprise an output interface via which data and/or commands are output by the processor 903 and an input interface via which data and/or commands are input to the processor 903.

The memory 905 is configured to store a computer program 907 comprising computer program instructions (computer program code 909) that controls the operation of the controller 901 when loaded into the processor 903. The computer program instructions, of the computer program 907, provide the logic and routines that enables the controller 901 to perform the methods illustrated in Fig. 2 The processor 903 by reading the memory 905 is able to load and execute the computer program 907.

The apparatus 107 therefore comprises: at least one processor 903; and at least one memory 905 including computer program code 909, the at least one memory 905 storing instructions 909 that, when executed by the at least one processor 903, cause the apparatus 913 at least to perform:
determining 201 that an object is positioned relative to a mediated reality headset such that one or more portions of an image displayed by the mediated reality headset could be leaked in a field of view of the object;
identifying 203 one or more portions of the image that are displayed by the mediated reality headset such that leakage of those one or more portions is expected to be in the field of view of the object; and
causing modification 205 of the display of the image by the mediated reality headset wherein the modification reduces light leakage for the one or more portions of the image that are identified as being displayed such that leakage of those one or more portions is expected to be in the field of view of the object.

As illustrated in Fig. 9 the computer program 907 can arrive at the controller 901 via any suitable delivery mechanism 911. The delivery mechanism 911 can be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid state memory, an article of manufacture that comprises or tangibly embodies the computer program 907. The delivery mechanism can be a signal configured to reliably transfer the computer program 907. The controller 901 can propagate or transmit the computer program 907 as a computer data signal. In some examples the computer program 907 can be transmitted to the controller 901 using a wireless protocol such as Bluetooth, Bluetooth Low Energy, Bluetooth Smart, 6LoWPan (IPᵥ6 over low power personal area networks) ZigBee, ANT+, near field communication (NFC), Radio frequency identification, wireless local area network (wireless LAN) or any other suitable protocol.

The computer program 907 comprises computer program instructions for causing an apparatus 913 to perform at least the following:
determining 201 that an object is positioned relative to a mediated reality headset such that one or more portions of an image displayed by the mediated reality headset could be leaked in a field of view of the object;
identifying 203 one or more portions of the image that are displayed by the mediated reality headset such that leakage of those one or more portions is expected to be in the field of view of the object; and
causing modification 205 of the display of the image by the mediated reality headset wherein the modification reduces light leakage for the one or more portions of the image that are identified as being displayed such that leakage of those one or more portions is expected to be in the field of view of the object.

The computer program instructions can be comprised in a computer program 907, a non-transitory computer readable medium, a computer program product, a machine readable medium. In some but not necessarily all examples, the computer program instructions can be distributed over more than one computer program 907.

Although the memory 905 is illustrated as a single component/circuitry it can be implemented as one or more separate components/circuitry some or all of which can be integrated/removable and/or can provide permanent/semi-permanent/ dynamic/cached storage.

Although the processor 903 is illustrated as a single component/circuitry it can be implemented as one or more separate components/circuitry some or all of which can be integrated/removable. The processor 903 can be a single core or multi-core processor.

References to "computer-readable storage medium", "computer program product", "tangibly embodied computer program" etc. or a "controller", "computer", "processor" etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term "circuitry" can refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and or processor(s), such as a microprocessor(s) or a portion of a microprocessor(s), that requires software (e.g. firmware) for operation, but the software can not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The apparatus 913 as shown in Fig. 9 can be provided within any suitable device. In some examples the apparatus 913 can be provided within a mediated reality headset 101 or within an electronic device that can be used to control the mediated reality headset 101 or any other suitable device. In some examples the apparatus 913 could be the mediated reality headset 101 or any other suitable device.

The blocks illustrated in Fig. 2 can represent steps in a method and/or sections of code in the computer program 907. The illustration of a particular order to the blocks does not necessarily imply that there is a required or preferred order for the blocks and the order and arrangement of the blocks can be varied. Furthermore, it can be possible for some blocks to be omitted.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. A data-processing apparatus, configured to be communicatively coupled to a mediated reality headset, comprising means for:
determining that an object is positioned relative to the mediated reality headset, wherein the mediated reality headset comprises one or more light guides which cause one or more cones of light to be leaked, such that one or more portions of an image displayed by the mediated reality headset could be leaked in a field of view of the object, wherein the object is an electronic device with a camera or a person;
identifying one or more portions of the image that are displayed by the mediated reality headset such that leakage of those one or more portions is expected to be in the field of view of the object; and
causing modification of the display of the image by the mediated reality headset wherein the modification reduces light leakage for the one or more portions of the image that are identified as being displayed such that leakage of those one or more portions is expected to be in the field of view of the object.

2. A data-processing apparatus as claimed in claim 1 wherein the modification of the display of the image comprises at least one of:
moving a portion of the image;
changing a brightness of a portion of the image;
temporarily stopping display of a portion of the image;
changing a colour space.

3. A data-processing apparatus as claimed in any preceding claim wherein the modification of the display of the image by the mediated reality headset comprises making a first modification to the one or more portions of the image that are positioned such that leakage of those one or more portions is expected be in the field of view of the object and making a second modification to one or more portions of the image that are positioned such that leakage of those one or more portions is not expected to be in the field of view of the object wherein the first modification reduces light leakage and the second modification does not reduce light leakage.

4. A data-processing apparatus as claimed in claim 3 wherein the second modification retains information from the image.

5. A data-processing apparatus as claimed in any of claims 3 to 4 wherein the first modification comprises stopping the display of the one or more portions of the image that are positioned such that leakage of those one or more portions is expected to be in the field of view of the object and the second modification comprises increasing the brightness of one or more portions of the image that are positioned such that leakage of those one or more portions is not expected to be in the field of view of the object.

6. A data-processing apparatus as claimed in any of claims 3 to 5 wherein the first modification comprises removing content from the one or more portions of the image that are positioned such that leakage of those one or more portions is expected to be in the field of view of the object and the second modification comprises adding content to one or more portions of the image that are positioned such that leakage of those one or more portions is not expected to be in the field of view of the object.

7. A data-processing apparatus as claimed in any preceding claim wherein the modification comprises a partial rendering of, at least part of, the image displayed on the mediated reality headset.

8. A data-processing apparatus as claimed in claim 1 wherein the object is an electronic device with a camera and the electronic device is configured to determine that it is positioned relative to the mediated reality headset such that the one or more portions of the image are in the field of view of the electronic device and the means of the apparatus are for obtaining information from the electronic device indicating the one or more portions of the image that are in the field of view of the electronic device.

9. A data-processing apparatus as claimed in any preceding claim wherein the means are for using the relative positions of the object and the mediated reality headset to determine the one or more portions of the image that are in the field of view of the object.

10. An electronic device comprising a data-processing apparatus as claimed in any preceding claim wherein the electronic device comprises at least one of:
a mediated reality headset,
a communications device.

11. A method carried out by a data-processing apparatus configured to be communicatively coupled to a mediated reality headset, the method comprising the following steps:
determining that an object is positioned relative to the mediated reality headset, wherein the mediated reality headset comprises one or more light guides which cause one or more cones of light to be leaked, such that one or more portions of an image displayed by the mediated reality headset could be leaked in a field of view of the object, wherein the object is an electronic device with a camera or a person;
identifying one or more portions of the image that are displayed by the mediated reality headset such that leakage of those one or more portions is expected to be in the field of view of the object; and
causing modification of the display of the image by the mediated reality headset wherein the modification reduces light leakage for the one or more portions of the image that are identified as being displayed such that leakage of those one or more portions is expected to be in the field of view of the object.

12. A method as claimed in claim 11 wherein the modification of the display of the image comprises at least one of:
moving a portion of the image;
changing a brightness of a portion of the image;
temporarily stopping display of a portion of the image;
changing a colour space.

13. A computer program comprising computer program instructions that, when executed by processing circuitry, configured to be communicatively coupled to a mediated reality headset, cause the processing circuitry to carry out the following steps:
determining that an object is positioned relative to a mediated reality headset, wherein the mediated reality headset comprises one or more light guides which cause one or more cones of light to be leaked, such that one or more portions of an image displayed by the mediated reality headset could be leaked in a field of view of the object, wherein the object is an electronic device with a camera or a person;
identifying one or more portions of the image that are displayed by the mediated reality headset such that leakage of those one or more portions is expected to be in the field of view of the object; and
causing modification of the display of the image by the mediated reality headset wherein the modification reduces light leakage for the one or more portions of the image that are identified as being displayed such that leakage of those one or more portions is expected to be in the field of view of the object.

## Patentansprüche

1. Datenverarbeitungseinrichtung, die dazu ausgelegt ist, an ein Headset für vermittelte Realität kommunikativ gekoppelt zu sein, und Mittel für Folgendes umfasst:
Bestimmen, dass ein Objekt relativ zum Headset für vermittelte Realität positioniert ist, wobei das Headset für vermittelte Realität einen oder mehrere Lichtleiter umfasst, die einen oder mehrere Lichtkegel veranlassen, auszutreten, derart, dass ein oder mehrere Abschnitte eines Bildes, das vom Headset für vermittelte Realität angezeigt wird, in einem Sichtfeld des Objekts austreten könnte, wobei das Objekt eine elektronische Vorrichtung mit einer Kamera oder einer Person ist;
Identifizieren von einem oder mehreren Abschnitten des Bildes, die vom Headset für vermittelte Realität angezeigt werden, derart, dass ein Austreten dieses einen oder dieser mehreren Abschnitte im Sichtfeld des Objekts erwartet wird; und
Veranlassen einer Modifizierung der Anzeige des Bildes durch das Headset für vermittelte Realität, wobei die Modifizierung einen Lichtaustritt für den einen oder die mehreren Abschnitte des Bildes reduziert, die als angezeigt identifiziert werden, derart, dass ein Austritt dieses einen oder dieser mehreren Abschnitte im Sichtfeld des Objekts erwartet wird.

2. Datenverarbeitungseinrichtung nach Anspruch 1, wobei die Modifizierung der Anzeige des Bildes mindestens eines von Folgendem umfasst:
Bewegen eines Abschnitts des Bildes;
Ändern einer Helligkeit eines Abschnitts des Bildes;
temporäres Beenden der Anzeige eines Abschnitts des Bildes;
Ändern eines Farbraums.

3. Datenverarbeitungseinrichtung nach einem der vorhergehenden Ansprüche, wobei die Modifizierung der Anzeige des Bildes durch das Headset für vermittelte Realität das Vornehmen einer ersten Modifizierung des einen oder der mehreren Abschnitte des Bildes, die derart positioniert sind, dass ein Austritt aus diesem einen oder diesen mehreren Abschnitten im Sichtfeld des Objekts erwartet wird, und das Vornehmen einer zweiten Modifizierung an einem oder mehreren Abschnitten des Bildes, die derart positioniert sind, dass ein Austritt von diesem einen oder diesen mehreren Abschnitten im Sichtfeld des Objekts nicht erwartet wird, umfasst, wobei die erste Modifizierung einen Lichtaustritt reduziert und die zweite Modifizierung keinen Lichtaustritt reduziert.

4. Datenverarbeitungseinrichtung nach Anspruch 3, wobei die zweite Modifizierung Informationen vom Bild einbehält.

5. Datenverarbeitungseinrichtung nach einem der Ansprüche 3 bis 4, wobei die erste Modifizierung das Beenden der Anzeige des einen oder der mehreren Abschnitte des Bildes umfasst, die derart positioniert sind, dass ein Austritt von diesem einen oder diesen mehreren Abschnitten im Sichtfeld des Objekts erwartet wird, und die zweite Modifizierung das Erhöhen der Helligkeit von einem oder mehreren Abschnitten des Bildes umfasst, die derart positioniert sind, dass ein Austritt aus diesem einen oder diesen mehreren Abschnitten im Sichtfeld des Objekts nicht erwartet wird.

6. Datenverarbeitungseinrichtung nach einem der Ansprüche 3 bis 5, wobei die erste Modifizierung das Entfernen eines Inhalts aus dem einen oder den mehreren Abschnitte des Bildes umfasst, die derart positioniert sind, dass ein Austritt von diesem einen oder diesen mehreren Abschnitten im Sichtfeld des Objekts erwartet wird, und die zweite Modifizierung das Hinzufügen eines Inhalts zu dem einen oder den mehreren Abschnitten des Bildes umfasst, die derart positioniert sind, dass ein Austritt aus diesem einen oder diesen mehreren Abschnitten im Sichtfeld des Objekts nicht erwartet wird.

7. Datenverarbeitungseinrichtung nach einem der vorhergehenden Ansprüche, wobei die Modifizierung ein teilweises Rendern mindestens eines Teils des Bildes umfasst, das auf dem Headset für vermittelte Realität angezeigt wird.

8. Datenverarbeitungseinrichtung nach Anspruch 1, wobei das Objekt eine elektronische Vorrichtung mit einer Kamera ist und die elektronische Vorrichtung dazu ausgelegt ist zu bestimmen, dass sie relativ zum Headset für vermittelte Realität positioniert ist, derart, dass der eine oder die mehreren Abschnitte des Bildes im Sichtfeld der elektronischen Vorrichtung liegen, und die Mittel der Einrichtung dem Erhalten von Informationen von der elektronischen Vorrichtung dienen, die den einen oder die mehreren Abschnitte des Bildes anzeigt, die im Sichtfeld der elektronischen Vorrichtung liegen.

9. Datenverarbeitungseinrichtung nach einem der vorhergehenden Ansprüche, wobei die Mittel dem Verwenden der relativen Positionen des Objekts und des Headsets für vermittelte Realität dienen, um den einen oder die mehreren Abschnitte des Bildes zu bestimmen, die im Sichtfeld des Objekts liegen.

10. Elektronische Vorrichtung, die eine Datenverarbeitungseinrichtung nach einem der vorhergehenden Ansprüche umfasst, wobei die elektronische Vorrichtung mindestens eines von Folgendem umfasst:
einem Headset für vermittelte Realität,
einer Kommunikationsvorrichtung.

11. Verfahren, das von einer Datenverarbeitungseinrichtung umgesetzt wird, die dazu ausgelegt ist, an ein Headset für vermittelte Realität kommunikativ gekoppelt zu sein, wobei das Verfahren die folgenden Schritte umfasst:
Bestimmen, dass ein Objekt relativ zum Headset für vermittelte Realität positioniert ist, wobei das Headset für vermittelte Realität einen oder mehrere Lichtleiter umfasst, die einen oder mehrere Lichtkegel veranlassen, auszutreten, derart, dass ein oder mehrere Abschnitte eines Bildes, das vom Headset für vermittelte Realität angezeigt wird, in einem Sichtfeld des Objekts austreten könnte, wobei das Objekt eine elektronische Vorrichtung mit einer Kamera oder einer Person ist;
Identifizieren von einem oder mehreren Abschnitten des Bildes, die vom Headset für vermittelte Realität angezeigt werden, derart, dass ein Austreten dieses einen oder dieser mehreren Abschnitte im Sichtfeld des Objekts erwartet wird; und
Veranlassen einer Modifizierung der Anzeige des Bildes durch das Headset für vermittelte Realität, wobei die Modifizierung einen Lichtaustritt für den einen oder die mehreren Abschnitte des Bildes reduziert, die als angezeigt identifiziert werden, derart, dass ein Austritt dieses einen oder dieser mehreren Abschnitte im Sichtfeld des Objekts erwartet wird.

12. Verfahren nach Anspruch 11, wobei die Modifizierung der Anzeige des Bildes mindestens eines von Folgendem umfasst:
Bewegen eines Abschnitts des Bildes;
Ändern einer Helligkeit eines Abschnitts des Bildes;
temporäres Beenden der Anzeige eines Abschnitts des Bildes;
Ändern eines Farbraums.

13. Computerprogramm, das Computerprogrammanweisungen umfasst, die, wenn sie von einer Verarbeitungsschaltung ausgeführt werden, die dazu ausgelegt ist, an ein Headset für vermittelte Realität gekoppelt zu sein, die Verarbeitungsschaltung veranlassen, die folgenden Schritte umzusetzen:
Bestimmen, dass ein Objekt relativ zu einem Headset für vermittelte Realität positioniert ist, wobei das Headset für vermittelte Realität einen oder mehrere Lichtleiter umfasst, die einen oder mehrere Lichtkegel veranlassen, auszutreten, derart, dass ein oder mehrere Abschnitte eines Bildes, das vom Headset für vermittelte Realität angezeigt wird, in einem Sichtfeld des Objekts austreten könnte, wobei das Objekt eine elektronische Vorrichtung mit einer Kamera oder einer Person ist;
Identifizieren von einem oder mehreren Abschnitten des Bildes, die vom Headset für vermittelte Realität angezeigt werden, derart, dass ein Austreten dieses einen oder dieser mehreren Abschnitte im Sichtfeld des Objekts erwartet wird; und
Veranlassen einer Modifizierung der Anzeige des Bildes durch das Headset für vermittelte Realität, wobei die Modifizierung einen Lichtaustritt für den einen oder die mehreren Abschnitte des Bildes reduziert, die als angezeigt identifiziert werden, derart, dass ein Austritt dieses einen oder dieser mehreren Abschnitte im Sichtfeld des Objekts erwartet wird.

## Revendications

1. Appareil de traitement de données, configuré pour être couplé de manière communicative à un casque de réalité médiatisée, comprenant des moyens pour :
déterminer qu'un objet est positionné par rapport au casque de réalité médiatisée, dans lequel le casque de réalité médiatisée comprend un ou plusieurs guides de lumière qui provoquent la fuite d'un ou plusieurs cônes de lumière de sorte qu'une ou plusieurs parties d'une image affichée par le casque de réalité médiatisée puissent fuir dans un champ de vision de l'objet, dans lequel l'objet est un dispositif électronique équipé d'une caméra ou une personne ;
identifier une ou plusieurs parties de l'image qui sont affichées par le casque de réalité médiatisée de sorte que la fuite de ces une ou plusieurs parties soit susceptible de se produire dans le champ de vision de l'objet ; et
provoquer la modification de l'affichage de l'image par le casque de réalité médiatisée, dans lequel la modification réduit la fuite de lumière pour les une ou plusieurs parties de l'image qui sont identifiées comme étant affichées de sorte que la fuite de ces une ou plusieurs parties soit susceptible de se produire dans le champ de vision de l'objet.

2. Appareil de traitement de données selon la revendication 1, dans lequel la modification de l'affichage de l'image comprend au moins une des opérations suivantes :
déplacer une partie de l'image ;
changer une luminosité d'une partie de l'image ;
arrêter temporairement l'affichage d'une partie de l'image ;
changer un espace colorimétrique.

3. Appareil de traitement de données selon l'une des revendications précédentes, dans lequel la modification de l'affichage de l'image par le casque de réalité médiatisée comprend le fait d'apporter une première modification aux une ou plusieurs parties de l'image qui sont positionnées de sorte que la fuite de ces une ou plusieurs parties soit susceptible de se produire dans le champ de vision de l'objet, et le fait d'apporter une deuxième modification à une ou plusieurs parties de l'image qui sont positionnées de sorte que la fuite de ces une ou plusieurs parties ne soit pas susceptible de se produire dans le champ de vision de l'objet, dans lequel la première modification réduit la fuite de lumière et la deuxième modification ne réduit pas la fuite de lumière.

4. Appareil de traitement de données selon la revendication 3, dans lequel la deuxième modification conserve les informations provenant de l'image.

5. Appareil de traitement de données selon l'une des revendications 3 et 4, dans lequel la première modification comprend le fait d'arrêter l'affichage des une ou plusieurs parties de l'image qui sont positionnées de sorte que la fuite de ces une ou plusieurs parties soit susceptible de se produire dans le champ de vision de l'objet, et la deuxième modification comprend le fait d'augmenter la luminosité d'une ou plusieurs parties de l'image qui sont positionnées de sorte que la fuite de ces une ou plusieurs parties ne soit pas susceptible de se produire dans le champ de vision de l'objet.

6. Appareil de traitement de données selon l'une des revendications 3 à 5, dans lequel la première modification comprend le fait de supprimer un contenu des une ou plusieurs parties de l'image qui sont positionnées de sorte que la fuite de ces une ou plusieurs parties soit susceptible de se produire dans le champ de vision de l'objet, et la deuxième modification comprend le fait d'ajouter un contenu à une ou plusieurs parties de l'image qui sont positionnées de sorte que la fuite de ces une ou plusieurs parties ne soit pas susceptible de se produire dans le champ de vision de l'objet.

7. Appareil de traitement de données selon l'une des revendications précédentes, dans lequel la modification comprend un rendu partiel d'au moins une partie de l'image affichée sur le casque de réalité médiatisée.

8. Appareil de traitement de données selon la revendication 1, dans lequel l'objet est un dispositif électronique équipé d'une caméra, et le dispositif électronique est configuré pour déterminer qu'il est positionné par rapport au casque de réalité médiatisée de sorte que les une ou plusieurs parties de l'image se trouvent dans le champ de vision du dispositif électronique, et les moyens de l'appareil servent à obtenir des informations à partir du dispositif électronique indiquant les une ou plusieurs parties de l'image qui se trouvent dans le champ de vision du dispositif électronique.

9. Appareil de traitement de données selon l'une des revendications précédentes, dans lequel les moyens sont destinés à utiliser les positions relatives de l'objet et du casque de réalité médiatisée pour déterminer les une ou plusieurs parties de l'image qui se trouvent dans le champ de vision de l'objet.

10. Dispositif électronique comprenant un appareil de traitement de données selon l'une des revendications précédentes, dans lequel le dispositif électronique comprend au moins un parmi :
un casque de réalité médiatisée,
un dispositif de communication.

11. Procédé mis en œuvre par un appareil de traitement de données configuré pour être couplé de manière communicative à un casque de réalité médiatisée, le procédé comprenant les étapes suivantes :
déterminer qu'un objet est positionné par rapport au casque de réalité médiatisée, dans lequel le casque de réalité médiatisée comprend un ou plusieurs guides de lumière qui provoquent la fuite d'un ou plusieurs cônes de lumière de sorte qu'une ou plusieurs parties d'une image affichée par le casque de réalité médiatisée puissent fuir dans un champ de vision de l'objet, dans lequel l'objet est un dispositif électronique équipé d'une caméra ou une personne ;
identifier une ou plusieurs parties de l'image qui sont affichées par le casque de réalité médiatisée de sorte que la fuite de ces une ou plusieurs parties soit susceptible de se produire dans le champ de vision de l'objet ; et
provoquer la modification de l'affichage de l'image par le casque de réalité médiatisée, dans lequel la modification réduit la fuite de lumière pour les une ou plusieurs parties de l'image qui sont identifiées comme étant affichées de sorte que la fuite de ces une ou plusieurs parties soit susceptible de se produire dans le champ de vision de l'objet.

12. Procédé selon la revendication 11 dans lequel la modification de l'affichage de l'image comprend au moins une des opérations suivantes :
déplacer une partie de l'image ;
changer une luminosité d'une partie de l'image ;
arrêter temporairement l'affichage d'une partie de l'image ;
changer un espace colorimétrique.

13. Programme informatique comprenant des instructions de programme informatique qui, lorsqu'elles sont exécutées par une circuiterie de traitement configurée pour être couplée de manière communicative à un casque de réalité médiatisée, amènent la circuiterie de traitement à mettre en œuvre les étapes suivantes :
déterminer qu'un objet est positionné par rapport à un casque de réalité médiatisée, dans lequel le casque de réalité médiatisée comprend un ou plusieurs guides de lumière qui provoquent la fuite d'un ou plusieurs cônes de lumière de sorte qu'une ou plusieurs parties d'une image affichée par le casque de réalité médiatisée puissent fuir dans un champ de vision de l'objet, dans lequel l'objet est un dispositif électronique équipé d'une caméra ou une personne ;
identifier une ou plusieurs parties de l'image qui sont affichées par le casque de réalité médiatisée de sorte que la fuite de ces une ou plusieurs parties soit susceptible de se produire dans le champ de vision de l'objet ; et
provoquer la modification de l'affichage de l'image par le casque de réalité médiatisée, dans lequel la modification réduit la fuite de lumière pour les une ou plusieurs parties de l'image qui sont identifiées comme étant affichées de sorte que la fuite de ces une ou plusieurs parties soit susceptible de se produire dans le champ de vision de l'objet.
